# EUROPÄISCHE PATENTSCHRIFT

(11) **EP 3 416 838 B1**
(45) Veröffentlichungstag und Bekanntmachung des Hinweises auf die Patenterteilung: **11.12.2019**
(21) Anmeldenummer: 16777533.7
(22) Anmeldetag: 05.10.2016
(51) Int. Cl.: B60H 1/34

(54) **VORRICHTUNG ZUM EINSTELLEN EINES LUFTSTROMS UND BELÜFTUNGSVORRICHTUNG FÜR EIN FAHRZEUG**
DEVICE FOR ADJUSTING AN AIR FLOW, AND VENTILATION DEVICE FOR A VEHICLE
DISPOSITIF POUR RÉGLER UN FLUX D'AIR ET DISPOSITIF DE VENTILATION POUR UN VÉHICULE

(30) Priorität: 18.02.2016 DE 102016001902
(43) Veröffentlichungstag der Anmeldung: 26.12.2018
(73) Patentinhaber: Audi AG, 85045 Ingolstadt (DE)
(72) Erfinder: WUNDERLICH, Matthias, 85053 Ingolstadt (DE); FUNK, Christian, 85049 Ingolstadt (DE)
(86) Internationale Anmeldenummer: PCT/EP2016/001649
(87) Internationale Veröffentlichungsnummer: WO 2017/140329

(56) Entgegenhaltungen:
- EP-A2- 1 712 384
- WO-A1-2016/075111
- DE-U1-202010 000 445
- US-A- 3 802 328

## Beschreibung

Die Erfindung betrifft eine Vorrichtung zum Einstellen eines Luftstroms gemäß der Gattung des Patentanspruchs 1, sowie eine Belüftungsvorrichtung für ein Fahrzeug mit mindestens einer solchen Vorrichtung zum Einstellen eines Luftstroms gemäß der Gattung des Patentanspruchs 8.

Vorrichtungen zum Einstellen eines Luftstroms, welcher aus einem Ausströmer strömt, sind in zahlreichen Variationen bekannt. Hierbei sind die Ausströmer in der Regel an einem Endbereich eines Luftkanals angeordnet und in eine Instrumententafel oder in ein Armaturenbrett eines Fahrzeugs integriert. Die Ausströmer können ein Gehäuse und eine Auslassöffnung aufweisen, wobei Lamellen im Bereich der Auslassöffnung angeordnet werden können. Um eine Luftstromrichtung des aus dem Ausströmer ausströmenden Luftstroms zu variieren, sind die Lamellen um eine erste Schwenkachse schwenkbar gelagert. Die Ausrichtung der Lamellen können durch ein auf mindestens einer Lamelle angeordnetes Bedienelement verändert werden. Hierbei kann das Bedienelement im mittleren Bereich des Ausströmers angeordnet werden. Über ein weiteres Bedienelement kann eine Schließvorrichtung bedient werden, über welche eine Stärke des Luftstroms variierbar ist. Alternativ kann durch das Bedienelement, welches die Ausrichtung der Lamellen verändert, auch das Bedienung der Schließvorrichtung vorgenommen werden.

Zudem sind korrespondierende Belüftungsvorrichtungen für ein Fahrzeug, mit mindestens einem Luftkanal, einem Ausströmer, welcher an einem Endbereich des Luftkanals angeordnet ist, und einer Vorrichtung zum Einstellen eines Luftstroms bekannt, welcher durch den Ausströmer in den Fahrzeuginnenraum abgegeben werden kann.

Aus der DE 10 2014 200 544 A1 ist eine Vorrichtung zum Steuern eines Luftstroms aus einem Luftausströmer bekannt. Zur Steuerung des Luftstroms wird eine Ausrichtung von verschwenkbaren Lamellen geändert, welche in eine erste oder in eine zweite Richtung verlaufen, sowie die Menge der ausströmenden Luft mittels einer Schließeinrichtung gesteuert. Die Lamellen verlaufen hierbei im Wesentlichen horizontal und vertikal oder sind in einem bestimmten Winkel zueinander angeordnet. Die Vorrichtung umfasst zudem mindestens ein Bedienelement, mittels welchem die Ausrichtung der in der ersten Richtung verlaufenden Lamellen und die Ausrichtung der in die zweite Richtung verlaufenden Lamellen sowie die Steuerung der Menge der ausströmenden Luft durch die Schließvorrichtung erfolgen. Das Bedienelement ist in eine Aufnahme einer in der ersten Richtung verlaufenden Steuerlamelle aufgenommen. Wird das Bedienelement in die zweite Richtung betätigt, erfolgt eine Verschwenkung der mit der Steuerlamelle gekoppelten, in der ersten Richtung verlaufenden Lamellen. Zudem werden die in die zweite Richtung verlaufenden Lamellen durch eine Betätigung des Bedienelements in die erste Richtung verschwenkt. Durch Drehen des Bedienelements kann die Schließeinrichtung betätigt werden, um die Menge der ausströmenden Luft einzustellen.

Weitere Beispiele sind in den Dokumenten DE 20 2010 000445 U1, EP 1 712 384, US 3802328, WO 2016/075111 offenbart: Der Erfindung liegt die Aufgabe zu Grunde, eine Vorrichtungen zum Einstellen eines Luftstroms sowie eine Belüftungsvorrichtung mit einer solchen Vorrichtung bereitzustellen, welche eine einfache und intuitive Einstellung des Luftstroms ermöglichen.

Erfindungsgemäß wird die Aufgabe durch Bereitstellung einer Vorrichtung zum Einstellen eines Luftstroms mit den Merkmalen des Patentanspruchs 1 und durch eine Belüftungsvorrichtung mit den Merkmalen des Patentanspruchs 8 gelöst. Vorteilhafte Ausführungsformen und Weiterbildungen der Erfindung sind in den abhängigen Ansprüchen angegeben.

Um eine Vorrichtung zum Einstellen eines Luftstroms sowie eine Belüftungsvorrichtung mit einer solchen Vorrichtung zum Einstellen eines Luftstroms bereitzustellen, welche eine einfache und intuitive Einstellung des Luftstroms ermöglichen, ist das Bedienelement zweiteilig ausgeführt, wobei ein erstes Bedienteil drehfest mit mindestens einer ersten Lamelle gekoppelt ist und ein mit dem ersten Bedienteil gekoppeltes zweites Bedienteil mit mindestens einer Luftklappe von mindestens einer Schließvorrichtung koppelbar und vom ersten Bedienteil abhebbar ist. Hierbei ist das zweite Bedienteil in einer abgehobenen ersten Stellung drehbar gelagert und mit der mindestens einen Luftklappe gekoppelt, so dass durch das Drehen des zweiten Bedienteils eine Verschwenkung der mindestens einen Luftklappe erfolgt.

Unter dem Abheben des zweiten Bedienteils wird im Folgenden eine Bewegung des zweiten Bedienteils entlang einer ersten Bewegungsachse verstanden. Die erste Bewegungsachse kann hierbei senkrecht zur Schwenkachse der mindestens einen ersten Lamelle verlaufen, wobei bei einer Variation der Ausrichtung der mindestens einen ersten Lamelle auch die Ausrichtung der ersten Bewegungsachse variiert wird. Um die Ausrichtung der mindestens einen ersten Lamelle zu variieren, kann das Bedienelement um eine Schwenkachse geschwenkt werden, welche im Wesentlichen der Schwenkachse der mindestens einen ersten Lamelle entspricht. Hierbei kann das erste Bedienteil drehfest mit der mindestens einen ersten Lamelle gekoppelt werden. Die Grifffläche des Bedienelements, an welcher ein Benutzer das Bedienelement greift, um es zu verschwenken und dadurch die Ausrichtung der mindestens einen ersten Lamelle zu variieren, kann am ersten Bedienteil oder am zweiten Bedienteil angeordnet werden.

Unter einem Ausströmer wird im Folgenden eine Einheit verstanden, welche an einem Endbereich eines Luftkanals angeordnet ist und diesen abschließt. Hierbei kann der Ausströmer ein Gehäuse aufweisen, welches kanalseitig von der Schließvorrichtung verschlossen werden kann. Eine Auslassöffnung des Ausströmers ist dem Fahrzeuginnenraum zugewandt und umfasst die mindestens eine erste Lamelle, welche schwenkbar am Gehäuse des Ausströmers gelagert ist. Durch die Schließvorrichtung kann die Menge des Luftstroms durch den Ausströmer in den Fahrzeuginnenraum variiert werden. Durch die mindestens eine erste Lamelle kann die Richtung des ausströmenden Luftstroms variiert werden.

Die Drehbewegung des zweiten Bedienteils ist in einer Ausgangstellung gesperrt, in welcher das zweite Bedienteil nicht vom ersten Bedienteil abgehoben ist. Dadurch ist in vorteilhafter Weise kein versehentliches Verstellen der Luftstromstärke möglich. Zudem können unterschiedliche Koppelmechanismen durch das Abheben des zweiten Bedienteils vom ersten Bedienteil aktiviert werden, so dass verschiedene Ausführungen zum Koppeln des zweiten Bedienteils mit der Luftklappe möglich sind. Die Drehbewegung des zweiten Bedienteils erfolgt in der Regel um dessen erste Bewegungsachse.

In vorteilhafter Ausgestaltung der erfindungsgemäßen Vorrichtung kann das zweite Bedienteil federbelastet eingebaut werden, so dass das zweite Bedienteil gegen eine Federkraft vom ersten Bedienteil abhebbar ist. In vorteilhafter Weise kehrt das zweite Bedienteil nach dem Bedienungsablauf durch die Federkraft in die Ausgangsstellung zurück. Dadurch kann in vorteilhafter Weise ein störendes Abstehen des zweiten Bedienteils verhindert werden. Zudem kann verhindert werden, dass nach einer gewollten Variation der Luftmenge eine ungewollte Variation der Luftmenge vorgenommen werden kann.

In weiterer vorteilhafter Ausgestaltung der erfindungsgemäßen Vorrichtung kann beim Abheben des zweiten Bedienteils vom ersten Bedienteil eine Sperrvorrichtung aktiviert werden, welche die mindestens eine erste Lamelle in einer aktuellen Position fixiert. In vorteilhafter Weise kann dadurch während der Variation der Luftmenge durch Drehen des zweiten Bedienteils, ein versehentliches Verstellen der Ausrichtung der mindestens einen ersten Lamelle und dadurch ein ungewolltes Variieren der Strömungsrichtung erschwert oder unterbunden werden.

In weiterer vorteilhafter Ausgestaltung der erfindungsgemäßen Vorrichtung kann das zweite Bedienteil elektrisch und/oder mechanisch mit der mindestens einen Luftklappe gekoppelt werden. Beispielsweise kann das zweite Bedienteil in der ersten abgehoben Stellung mit einer Kardanwelle gekoppelt werden, wobei ein Drehmechanismus, welcher beim Drehen des zweiten Bedienteils aktivierbar ist, nur im abgehoben Zustand mit der Kardanwelle zusammenwirkt, um die Luftklappe zu bewegen. Alternativ kann das zweite Bedienteil mit einem Elektroantrieb gekoppelt werden, wobei durch das Abheben des zweiten Bedienteils vom ersten Bedienteil der Elektroantrieb aktiviert werden kann. Durch das Drehen des zweiten Bedienteils um die Bewegungsachse kann beispielsweise die Dauer der Aktivierung beziehungsweise die Positionsveränderung der Luftklappe variiert werden. Hierbei treibt der Elektroantrieb die Luftklappe an. Eine Auswerte- und Steuereinheit kann die aktuelle Position der Luftklappe und die durch die Drehbewegung des zweiten Bedienteils erwünschte Luftklappenstellung ermitteln und entsprechende Steuersignale an den Elektroantrieb ausgeben.

In weiterer vorteilhafter Ausgestaltung der erfindungsgemäßen Vorrichtung können mit dem zweiten Bedienteil mehrere Betätigungsabläufe umgesetzt werden, wobei jedem der Betätigungsabläufe eine korrespondierende Bedienfunktion zugeordnet ist, so dass unterschiedliche Bedienfunktionen durch das zweite Bedienteil aktiviert und ausgeführt werden können. Hierbei kann bei einer elektrischen Kopplung die Auswerte- und Steuereinheit die Betätigungsabläufe erfassen und entsprechende Steuersignale ausgeben. Ein erster Betätigungsablauf kann beispielsweise als ein einmaliges Ziehen bzw. Drücken am zweiten Bedienteil vorgegeben werden. Ein weiterer Betätigungsablauf kann als mehrmaliges Ziehen bzw. Drücken am zweiten Bedienteil vorgegeben werden. Alternativ kann ein Betätigungsablauf als Ziehen bzw. Drücken und Halten für eine erste Zeitdauer in der ersten Stellung oder als Ziehen bzw. Drücken und Halten für eine zweite längere Zeitdauer in der ersten Stellung vorgegeben werden. Zusätzlich oder alternativ können mehrere Stellungen entlang der ersten Bewegungsachse vorgegeben werden, welche beispielsweise als Raststellungen umgesetzt werden können So können beispielsweise auf der ersten Bewegungsachse neben der Ausgangstellung und der ersten Stellung weitere Stellungen vorgesehen werden. Hierbei kann eine korrespondierende Bedienfunktion aktiviert werden, wenn das zweite Bedienteil eine bestimmte Stellung erreicht.

In weiterer vorteilhafter Ausgestaltung der erfindungsgemäßen Vorrichtung kann das zweite Bedienteil zwischen einer ersten Endposition und einer zweiten Endposition drehbar gelagert werden, wobei die Luftklappe in der ersten Endposition einen maximalen Querschnitt des Luftkanals freigibt und in der zweiten Position den Luftkanal verschließt. In vorteilhafter Weise kann ein Überdrehen des zweiten Bedienteils durch das Stoppen der Drehbewegung an den vorgegebenen Endpostionen unterbunden werden. Dadurch kann der Insasse anhand der Stellung des zweiten Bedienteils erkennen, in welchem Zustand sich die Luftklappe befindet.

In weiterer vorteilhafter Ausgestaltung der erfindungsgemäßen Vorrichtung kann mindestens eine zweite Lamelle um eine zweite Schwenkachse schwenkbar gelagert werden und die Ausrichtung der mindestens einen zweiten Lamelle über das erste Bedienteil verändert werden. Hierbei kann die zweite Schwenkachse senkrecht zur ersten Schwenkachse verlaufen. Beispielsweise kann das erste Bedienteil auf der mindestens einen ersten Lamelle verschoben werden, um die Ausrichtung der mindestens einen zweiten Lamelle zu variieren. Hierbei kann die mindestens eine zweite Lamelle hinter der mindestens einen ersten Lamelle angeordnet werden. Des Weiteren kann die mindestens eine zweite Lamelle im Wesentlichen senkrecht zur mindestens einen ersten Lamelle verlaufen.

In vorteilhafter Ausgestaltung der erfindungsgemäßen Belüftungsvorrichtung kann bei Anwendung eines ersten Betätigungsablaufs des zweiten Bedienteils durch die anschließende Drehung des zweiten Bedienteils eine Luftklappe einer Schließvorrichtung eines korrespondierenden Ausströmers verstellt werden.

In weiterer vorteilhafter Ausgestaltung der erfindungsgemäßen Belüftungsvorrichtung können bei Anwendung eines zweiten Betätigungsablaufs des zweiten Bedienteils durch die Drehung des zweiten Bedienteils die Luftklappen mehrerer zugeordneter Schließvorrichtungen verstellt werden, wobei die Schließvorrichtungen unterschiedlichen Ausströmern zugeordnet sind. Beispielsweise kann das Betätigungselement, mit welchem der zweite Betätigungsablauf durchführbar ist, in dem Ausströmer angeordnet werden, welcher im Zugriffsbereich des Fahrers angeordnet ist. In vorteilhafter Weise kann der Fahrer dadurch die Menge der Luftströmung von mehreren vorhandenen Ausströmern mit einer Betätigung einstellen.

Ein Ausführungsbeispiel der Erfindung ist in der Zeichnung dargestellt und wird in der nachfolgenden Beschreibung näher erläutert. In der Zeichnung bezeichnen gleiche Bezugszeichen Komponenten bzw. Elemente, die gleiche bzw. analoge Funktionen ausführen. Hierbei zeigt:
- Fig. 1: eine schematische Schnittdarstellung eines Ausführungsbeispiels einer erfindungsgemäßen Vorrichtung zum Einstellen eines Luftstroms,
- Fig. 2: eine vergrößerte schematische Frontansicht einer ersten Lamelle mit einem Bedienelement der erfindungsgemäßen Vorrichtung zum Einstellen eines Luftstroms aus Fig. 1 in einer Ausgangstellung,
- Fig. 3: eine vergrößerte schematische Draufsicht auf die erste Lamelle aus Fig. 2, und
- Fig. 4: eine vergrößerte schematische Frontansicht der ersten Lamelle mit dem Bedienelement Fig. 2 und 3 in einer ersten Stellung.

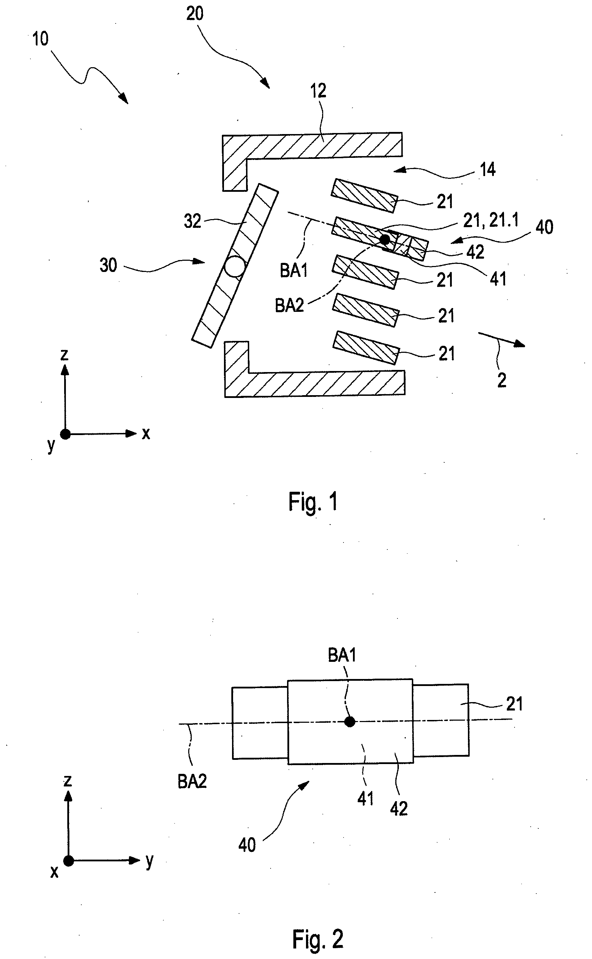

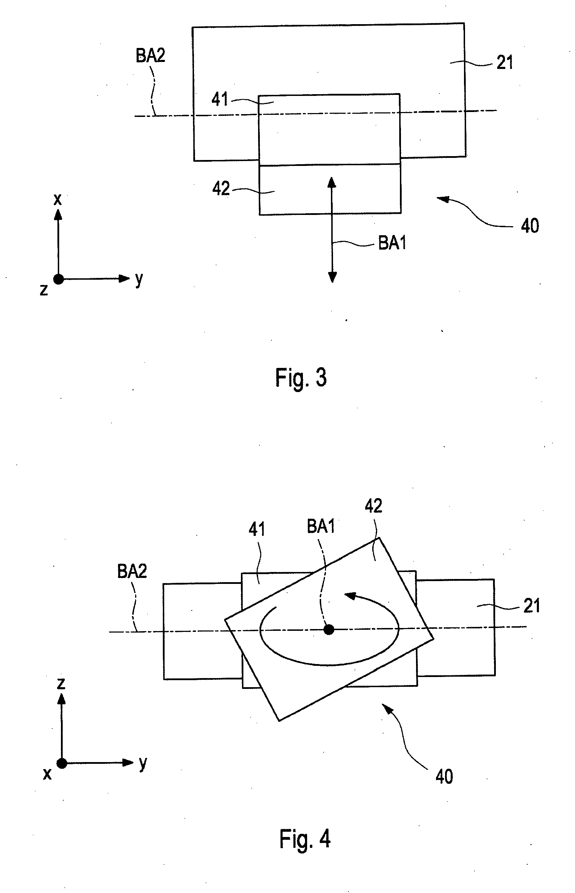

Wie aus Fig. 1 bis 4 ersichtlich ist, weist eine Vorrichtung 20 zum Einstellen eines Luftstroms 2, welcher aus einem Ausströmer 10 strömt, mindestens einer Schließvorrichtung 30, über welche eine Stärke bzw. Menge des Luftstroms 2 variierbar ist, und mindestens eine erste Lamelle 21, 21.1 auf. Die mindestens eine erste Lamelle 21, 21.1 ist zur Variation der Strömungsrichtung um eine erste Schwenkachse schwenkbar gelagert, wobei die Ausrichtung der mindestens einen ersten Lamelle 21, 21.1 und die Bedienung der Schließvorrichtung 30 über ein Bedienelement 40 erfolgt. Hierbei ist das Bedienelement 30 zumindest auf einer ersten Lamelle 21, 21.1 angeordnet.

Erfindungsgemäß ist das Bedienelement 40 zweiteilig ausgeführt, wobei ein erstes Bedienteil 41 drehfest mit zumindest einer ersten Lamelle 21, 21.1 gekoppelt ist, und ein mit dem ersten Bedienteil 41 gekoppeltes zweites Bedienteil 42 ist mit mindestens einer Luftklappe 32 der mindestens einen Schließvorrichtung 30 koppelbar und vom ersten Bedienteil 41 abhebbar ausgeführt, wobei das zweite Bedienteil 42 in einer abgehobenen ersten Stellung drehbar gelagert und mit der mindestens einen Luftklappe 32 gekoppelt ist, so dass durch das Drehen des zweiten Bedienteils 42 eine Verschwenkung der mindestens einen Luftklappe 32 erfolgt.

Eine nicht näher dargestellte Belüftungsvorrichtung für ein Fahrzeug umfasst mindestens einen Luftkanal, den Ausströmer 10, welcher an einem Endbereich des Luftkanals angeordnet ist, und die Vorrichtung 20 zum Einstellen des Luftstroms 2, welcher durch den Ausströmer 10 in den Fahrzeuginnenraum abgegeben werden kann.

Wie aus Fig. 1 weiter ersichtlich ist, weist der Ausströmer 10 im dargestellten Ausführungsbeispiel ein Gehäuse 12 mit einer Auslassöffnung 14 auf. Im Bereich der Auslassöffnung 14 sind mehrere erste Lamellen 21 angeordnet. Das Bedienelement 40 ist auf einer Steuerlamelle 21.1 angeordnet. Im Wesentlichen verlaufen die Lamellen 21, 21.1 in Fahrzeugquerrichtung y und können um eine Schwenkachse in Fahrzeugquerrichtung y verschwenkt werden. Durch das Verschwenken der ersten Lamellen 21, 21.1 kann der Luftstrom 2 entlang der Fahrzeughochachse z nach oben oder nach unten gelenkt werden. Die ersten Lamellen 21 sind über eine nicht dargestellte erste Kopplungsvorrichtung mit der Steuerlamelle 21.1 gekoppelt. Durch die erste Kopplungsvorrichtung werden die ersten Lamellen 21 verschwenkt, wenn die Steuerlamelle 21.1 durch das Bedienelement 40 verschwenkt wird. Das erste Bedienteil 41 ist drehfest mit der Steuerlamelle 21.1 verbunden, so dass zum Verschenken der ersten Lamellen 21 das Bedienelement 40 um die Schwenkachse der ersten Steuerlamelle 21.1 verschwenkt werden kann. Im dargestellten Ausführungsbeispiel ist die zweite Lamelle 21 von oben als Steuerlamelle 21.1 ausgeführt. Es besteht aber auch die Möglichkeit eine andere Lamelle 21 oder mehrere Lamellen 21 als Steuerlamelle 21.1 auszuführen. Das Bedienelement 40 kann eine nicht dargestellte Grifffläche für den Nutzer am ersten Bedienteil 41 oder am zweiten Bedienteil 42 aufweisen.

Wie aus Fig. 1 bis 4 weiter ersichtlich ist, kann das Bedienelement 40 entlang einer ersten Bewegungsachse BA1 bewegt werden. Im dargestellten Ausführungsbeispiel ist die erste Bewegungsachse BA1 senkrecht zur Schwenkachse der Steuerlamelle 21.1 angeordnet. Bei einer Bewegung der Steuerlamelle 21.1 in Richtung eines Insassen, wird das zweite Bedienteil 42 vom ersten Bedienteil 41 abgehoben. Bei einer Drehung des zweiten Bedienteils 42 um eine erste Drehsachse, welcher der ersten Bewegungsachse BA1 entspricht, kann die Luftklappe 32 verschwenkt werden. Das zweite Bedienteil 42 ist im dargestellten Ausführungsbeispiel federbelastet ausgeführt, wobei das zweite Bedienteil 42 gegen eine Federkraft vom ersten Bedienteil 41 abhebbar ist. Dadurch kehrt das zweite Bedienteil 41 nach dem Bedienablauf in die Ausgangstellung zurück und steht nicht störend ab.

Wie aus Fig. 1 weiter ersichtlich ist, ist die Luftklappe 32 zwischen dem Luftkanal und dem Ausströmer 20 angeordnet. Im Dargestellten Ausführungsbeispiel ist die Luftklappe 32 als schwenkbare einteilige Klappe ausgeführt. In einem alternativen Ausführungsbeispiel kann die Luftklappe als so genannte "Schmetterlingsflügelklappe" ausgeführt werden. Das zweite Bedienteil 42 des Bedienelements 40 kann elektrisch oder mechanisch mit der mindestens einen Luftklappe 32 gekoppelt werden. Zudem ist eine Kombination aus elektrischer und mechanischer Kopplung vorstellbar. Bei einer nicht dargestellten mechanischen Kopplung kann beim Abheben des zweiten Bedienteils 42 eine Kardanwelle mit dem zweiten Bedienteil 42 zusammenwirken und die Luftklappe 32 über korrespondierende Kegelzahnräder antreiben. Bei einer elektrischen Kopplung kann beim Abheben des zweiten Bedienteils 42 ein nicht dargestellter Elektroantrieb zum Verschwenken der Luftklappe 32 aktiviert werden. Das zweite Bedienteil 42 ist zwischen einer ersten Endposition und einer zweiten Endposition drehbar gelagert, wobei die Luftklappe 32 in der ersten Endposition einen maximalen Querschnitt des Luftkanals freigibt und in der zweiten Position den Luftkanal verschließt. Das zweite Bedienteil 42 kann nicht weiter als zu den vorgegebenen Endpositionen gedreht werden. So kann die maximale Drehbewegung als Winkelbereich vorgegeben werden, der beispielsweise kleiner als 180° ist.. Zudem können mit dem zweiten Bedienteil 42 mehrere Betätigungsabläufe umgesetzt werden, wobei jedem der Betätigungsabläufe eine korrespondierende Bedienfunktion zugeordnet ist, so dass unterschiedliche Bedienfunktionen durch das zweite Bedienteil 42 aktiviert und ausgeführt werden können. Ein erster Betätigungsablauf kann beispielsweise als ein einmaliges Ziehen bzw. Drücken am zweiten Bedienteil 42 vorgegeben werden. Ein weiterer Betätigungsablauf kann als mehrmaliges Ziehen bzw. Drücken am zweiten Bedienteil 42 ausgeführt werden. Alternativ kann ein weiterer Betätigungsablauf als Ziehen bzw. Drücken und Halten für eine erste Zeitdauer in der ersten Stellung oder als Ziehen bzw. Drücken und Halten für eine längere zweite Zeitdauer in der ersten Stellung ausgeführt werden. Eine Auswerte- und Steuereinheit kann den ausgeführten Betätigungsablauf mit hinterlegten Betätigungsabläufen abgleichen und eine entsprechende dem erkannten Betätigungsablauf zugeordnete Bedienfunktion aktivieren bzw. ausführen. Zusätzlich oder alternativ können mehrere Stellungen entlang der ersten Bewegungsachse BA1 vorgegeben werden, welche beispielsweise als Raststellungen umgesetzt werden können. So können beispielsweise auf der ersten Bewegungsachse BA1 neben der Ausgangstellung und der ersten Stellung weitere Stellungen vorgesehen werden. Hierbei kann eine korrespondierende Bedienfunktion aktiviert werden, wenn das zweite Bedienteil 42 eine bestimmte Stellung erreicht. Beispielsweise kann bei Anwendung eines ersten Betätigungsablaufs des zweiten Bedienteils 42 durch die anschließende Drehung des zweiten Bedienteils 42 die Luftklappe 32 der Schließvorrichtung 30 eines korrespondierenden Ausströmers 10 verstellt werden. Alternativ oder zusätzlich können bei Anwendung eines zweiten Betätigungsablaufs des zweiten Bedienteils 42 durch die anschließende Drehung des zweiten Bedienteils 42 die Luftklappen 32 von mehreren Schließvorrichtungen 30 verstellt werden, wobei die Schließvorrichtungen 30 in unterschiedlichen Ausströmern 10 angeordnet sind.

In einem alternativen nicht dargestellten Ausführungsbeispiel kann mindestens eine in eine zweite Richtung verlaufende zweite Lamelle um eine zweite Schwenkachse schwenkbar im Bereich der Auslassöffnung 14 gelagert werden. In einem bevorzugten Ausführungsbeispiel sind die zweiten Lamellen mit Blickrichtung vom Fahrzeuginnenraum hinter den ersten Lamellen 21 angeordnet. Des Weiteren können die zweiten Lamellen bevorzugt in Fahrzeughochrichtung z verlaufen, wobei die zweite Schwenkachse in Fahrzeughochrichtung z verläuft. Durch das Verschwenken der zweiten Lamellen kann der Luftstrom in Fahrzeugquerrichtung y nach links oder nach rechts gelenkt werden. Um die zweiten Lamellen zu verschwenken, kann das erste Bedienteil 41 des Bedienelements 40 entlang einer zweiten Bewegungsachse
BA2 auf der ersten Steuerlamelle 21.1 verschoben werden. Durch eine Bewegung des ersten Bedienteils 41 entlang der zweiten Bewegungsachse BA2 können die zweiten Lamellen über eine nicht dargestellte zweite Kopplungsvorrichtung verschwenkt werden.

In einem weiteren alternativen nicht dargestellten Ausführungsbeispiel kann beim Abheben des zweiten Bedienteils 42 vom ersten Bedienteil 41 eine Sperrvorrichtung aktiviert werden, welche die mindestens eine erste Lamelle 21, 21.1 in einer aktuellen Position fixiert. Bei einer Ausführung mit ersten und zweiten Lamellen können auch die zweiten Lamellen von der Sperrvorrichtung fixiert werden. Hierbei kann beispielsweise durch Fixieren der Steuerlamelle 21.1 oder durch Fixieren der ersten Kopplungsvorrichtung oder der zweiten Kopplungsvorrichtung ein unbeabsichtigtes Verschwenken der ersten Lamellen 21, 21.1 oder der zweiten Lamellen beim Drehen des zweiten Bedienteils 42 unterbunden oder erschwert werden. Bei einer Ausführung der Erfindung, bei welcher mit dem zweiten Bedienteil 42 mehrere Betätigungsabläufe ausgeführt werden können, kann ein dritter Betätigungsablauf für das Aktivieren der Sperrvorrichtung vorgesehen werden.

### BEZUGSZEICHENLISTE

- 2: Luftstrom
- 10: Ausströmer
- 12: Gehäuse
- 14: Auslassöffnung
- 20: Luftstromseinstellvorrichtung
- 21.1: Steuerlamelle
- 21: erste Lamelle
- 22: zweite Lamelle
- 30: Schließvorrichtung
- 32: Luftklappe
- 40: Bedienelement
- 41: erstes Bedienteil
- 42: zweites Bedienteil
- BA1, BA2: Bewegungsachse

## Patentansprüche

1. Vorrichtung (20) zum Einstellen eines Luftstroms (2), welcher aus einem Ausströmer (10) strömt, mit mindestens einer Schließvorrichtung (30), über welche eine Stärke des Luftstroms (2) variierbar ist, und mindestens einer ersten Lamelle (21, 21.1), welche zur Variation der Strömungsrichtung um eine erste Schwenkachse schwenkbar gelagert ist, wobei die Ausrichtung der mindestens einen ersten Lamelle (21, 21.1) und die Bedienung der Schließvorrichtung (30) über ein Bedienelement (40) erfolgt, welches auf zumindest einer ersten Lamelle (21, 21.1) angeordnet ist,
wobei das Bedienelement (40) zweiteilig ausgeführt ist,
und
wobei ein erstes Bedienteil (41) drehfest mit der mindestens einen ersten Lamelle (21, 21.1) gekoppelt ist, und ein mit dem ersten Bedienteil (41) gekoppeltes zweites Bedienteil (42) mit mindestens einer Luftklappe (32) der mindestens einen Schließvorrichtung (30) koppelbar und vom ersten Bedienteil (41) abhebbar ist,
**dadurch gekennzeichnet, dass** das zweite Bedienteil (42) in einer abgehobenen ersten Stellung drehbar gelagert und mit der mindestens einen Luftklappe (32) gekoppelt ist, so dass durch das Drehen des zweiten Bedienteils (42) eine Verschwenkung der mindestens einen Luftklappe (32) erfolgt.

2. Vorrichtung nach Anspruch 1, **dadurch gekennzeichnet, dass** das zweite Bedienteil (42) federbelastet ist, wobei das zweite Bedienteil (42) gegen eine Federkraft vom ersten Bedienteil (41) abhebbar ist.

3. Vorrichtung nach Anspruch 1 oder 2, **dadurch gekennzeichnet, dass** beim Abheben des zweiten Bedienteils (42) vom ersten Bedienteil (41) eine Sperrvorrichtung aktivierbar ist, welche die mindestens eine erste Lamelle (21, 21.1) in einer aktuellen Position fixiert.

4. Vorrichtung nach einem der Ansprüche 1 bis 3, **dadurch gekennzeichnet, dass** das zweite Bedienteil (42) elektrisch und/oder mechanisch mit der mindestens einen Luftklappe (32) gekoppelt ist.

5. Vorrichtung nach einem der Ansprüche 1 bis 4, **dadurch gekennzeichnet, dass** mit dem zweiten Bedienteil (42) mehrere Betätigungsabläufe umsetzbar sind, wobei jedem der Betätigungsabläufe eine korrespondierende Bedienfunktion zugeordnet ist.

6. Vorrichtung nach einem der Ansprüche 1 bis 5, **dadurch gekennzeichnet, dass** das zweite Bedienteil (42) zwischen einer ersten Endposition und einer zweiten Endposition drehbar gelagert ist, wobei die Luftklappe (32) in der ersten Endposition einen maximalen Querschnitt des Luftkanals freigibt und in der zweiten Endposition den Luftkanal verschließt.

7. Vorrichtung nach einem der Ansprüche 1 bis 6, **dadurch gekennzeichnet, dass** mindestens zweite Lamelle (22) um eine zweite Schwenkachse schwenkbar gelagert ist und die Ausrichtung der mindestens einen zweiten Lamelle (22) über das Bedienelement (40) einstellbar ist, wobei die zweite Schwenkachse senkrecht zur ersten Schwenkachse verläuft.

8. Belüftungsvorrichtung für ein Fahrzeug, mit mindestens einem Luftkanal, einem Ausströmer (10), welcher an einem Endbereich des Luftkanals angeordnet ist, und mindestens einer Vorrichtung (20) zum Einstellen eines Luftstroms (2), welcher durch den Ausströmer (10) in den Fahrzeuginnenraum abgebbar ist, **dadurch gekennzeichnet, dass** die mindestens eine Vorrichtung (20) zum Einstellen eines Luftstroms (2) nach einem der Ansprüche 1 bis 7 ausgeführt ist.

9. Belüftungsvorrichtung nach Anspruch 8, **dadurch gekennzeichnet, dass** das bei Anwendung eines ersten Betätigungsablaufs des zweiten Bedienteils (42) durch die anschließende Drehung des zweiten Bedienteils (42) eine Luftklappe (32) einer Schließvorrichtung (30) eines korrespondierenden Ausströmers (10) verstellbar ist.

10. Belüftungsvorrichtung nach Anspruch 8 oder 9, **dadurch gekennzeichnet, dass** bei Anwendung eines zweiten Betätigungsablaufs des zweiten Bedienteils (42) durch die anschließende Drehung des zweiten Bedienteils die Luftklappen (32) mehrerer zugeordneter Schließvorrichtungen (30) verstellbar sind, wobei die Schließvorrichtungen (32) unterschiedlichen Ausströmern (10) zugeordnet sind.

## Claims

1. Device (20) for adjusting an air flow (2), which flows out of an air outlet (10), having at least one closing device (30), via which a strength of the air flow (2) can be varied, and having at least one first blade (21, 21.1), which is pivotably mounted about a first pivot axis to vary the flow direction, wherein the alignment of the at least one first blade (21, 21.1) and the operation of the closing device (30) are effected via an operating element (40) which is arranged on at least one first blade (21, 21.1), wherein the operating element (40) is made in two parts, and wherein a first operating part (41) is coupled rotationally fixed to the at least one first blade (21, 21.1), and a second operating part (42) coupled to the first operating part (41) can be coupled to at least one air flap (32) of the at least one closing device (30) and can be lifted off the first operating part (41), **characterised in that** the second operating part (42) is rotatably mounted in a lifted first position and is coupled to the at least one air flap (32) so that the at least one air flap (32) is pivoted by rotating the second operating part (42).

2. Device according to claim 1, **characterised in that** the second operating part (42) is spring-loaded, wherein the second operating part (42) can be lifted from the first operating part (41) against a spring force.

3. Device according to claim 1 or 2, **characterised in that** when lifting the second operating part (42) from the first operating part (41) a locking device can be activated, which fixes the at least one first blade (21, 21.1) in a current position.

4. Device according to any one of claims 1 to 3, **characterised in that** the second operating part (42) is electrically and/or mechanically coupled to the at least one air flap (32).

5. Device according to any one of claims 1 to 4, **characterised in that** with the second operating part (42) a plurality of actuation operations can be implemented, wherein each of the actuation operations is associated with a corresponding operating function.

6. Device according to any one of claims 1 to 5, **characterised in that** the second operating part (42) is rotatably mounted between a first end position and a second end position, wherein the air flap (32) releases a maximum cross section of the air duct in the first end position and closes the air duct in the second end position.

7. Device according to any one of claims 1 to 6, **characterised in that** at least a second blade (22) is pivotably mounted about a second pivot axis and the alignment of the at least one second blade (22) is adjustable via the operating element (40), wherein the second pivot axis is perpendicular to the first pivot axis.

8. Ventilation device for a vehicle, having at least one air duct, one air outlet (10) arranged at an end region of the air duct, and at least one device (20) for adjusting an air flow (2), which can be dispensed into the vehicle interior through the air outlet (10), **characterised in that** the at least one device (20) for adjusting an air flow (2) is executed according to any one of claims 1 to 7.

9. Ventilation device according to claim 8, **characterised in that** the application of a first actuation operation of the second operating part (42) an air flap (32) of a closing device (30) of a corresponding air outlet (10) can be adjusted by the subsequent rotation of the second control part (42).

10. Ventilation device according to claim 8 or 9, **characterised in that** in the application of a second actuation operation of the second operating part (42) the air flaps (32) of a plurality of associated closing devices (30) can be adjusted by the subsequent rotation of the second operating part, wherein the closing devices (32) are associated with different air outlets (10).

## Revendications

1. Dispositif (20) pour le réglage d'un courant d'air (2) qui s'écoule d'un diffuseur (10), avec au moins un dispositif de fermeture (30) par le biais duquel une puissance du courant d'air (2) peut être variée, et au moins une première lamelle (21, 21.1) qui est logée de manière pivotante pour la variation du sens d'écoulement autour d'un premier axe de pivotement, dans lequel l'orientation de l'au moins une première lamelle (21, 21.1) et le contrôle du dispositif de fermeture (30) est effectué par le biais d'un élément de contrôle (40) qui est agencé sur au moins une première lamelle (21, 21.1),
dans lequel l'élément de contrôle (40) est réalisé en deux parties, et
dans lequel une première partie de contrôle (41) est accouplée sans pouvoir tourner à l'au moins une première lamelle (21, 21.1), et une seconde partie de contrôle (42) accouplée à la première partie de contrôle (41) peut être accouplée à au moins un clapet d'aération (32) de l'au moins un dispositif de fermeture (30) et peut être levée de la première partie de contrôle (41),
**caractérisé en ce que**
la seconde partie de contrôle (42) est logée de manière à pouvoir tourner dans une première position levée et est accouplée à l'au moins un clapet d'aération (32) de sorte qu'un pivotement de l'au moins un clapet d'aération (32) soit effectué par la rotation de la seconde partie de contrôle (42).

2. Dispositif selon la revendication 1, **caractérisé en ce que** la seconde partie de contrôle (42) est sollicitée par ressort, dans lequel la seconde partie de contrôle (42) peut être levée contre une force de ressort de la première partie de contrôle (41).

3. Dispositif selon la revendication 1 ou 2, **caractérisé en ce que** lors du levage de la seconde partie de contrôle (42) de la première partie de contrôle (41) un dispositif de verrouillage peut être activé, lequel fixe l'au moins une première lamelle (21, 21.1) dans une position actuelle.

4. Dispositif selon l'une quelconque des revendications 1 à 3, **caractérisé en ce que** la seconde partie de contrôle (42) est accouplée électriquement et/ou mécaniquement à l'au moins un clapet d'aération (32).

5. Dispositif selon l'une quelconque des revendications 1 à 4, **caractérisé en ce qu'**avec la seconde partie de contrôle (42) plusieurs opérations d'actionnement peuvent être mises en oeuvre, dans lequel une fonction de contrôle correspondante est associée à chacune des opérations d'actionnement.

6. Dispositif selon l'une quelconque des revendications 1 à 5, **caractérisé en ce que** la seconde partie de contrôle (42) est logée de manière à pouvoir tourner entre une première position d'extrémité et une seconde position d'extrémité, dans lequel le clapet d'aération (32) dans la première position d'extrémité libère une section transversale maximale du canal d'air et dans la seconde position d'extrémité ferme le canal d'air.

7. Dispositif selon l'une quelconque des revendications 1 à 6, **caractérisé en ce qu'**au moins une seconde lamelle (22) est logée de manière pivotante autour d'un second axe de pivotement et l'orientation de l'au moins une seconde lamelle (22) est réglable par le biais de l'élément de contrôle (40), dans lequel le second axe de pivotement s'étend perpendiculairement au premier axe de pivotement.

8. Dispositif de ventilation pour un véhicule, avec au moins un canal d'air, un diffuseur (10) qui est agencé au niveau d'une zone d'extrémité du canal d'air, et au moins un dispositif (20) pour le réglage d'un courant d'air (2) qui peut être émis par le diffuseur (10) dans l'habitacle de véhicule, **caractérisé en ce que** l'au moins un dispositif (20) est réalisé pour le réglage d'un courant d'air (2) selon l'une quelconque des revendications 1 à 7.

9. Dispositif de ventilation selon la revendication 8, **caractérisé en ce que** lors de l'application d'une première opération d'actionnement de la seconde partie de contrôle (42) un clapet d'aération (32) d'un dispositif de fermeture (30) d'un diffuseur correspondant (10) est réglable par la rotation consécutive de la seconde partie de contrôle (42).

10. Dispositif de ventilation selon la revendication 8 ou 9, **caractérisé en ce que** lors de l'application d'une seconde opération d'actionnement de la seconde partie de contrôle (42) les clapets d'aération (32) de plusieurs dispositifs de fermeture (30) associés sont réglables par la rotation contiguë de la seconde partie de contrôle, dans lequel les dispositifs de fermeture (32) sont associés à différents diffuseurs (10).
